# EUROPÄISCHE PATENTSCHRIFT

(11) **EP 4 192 695 B1**
(45) Veröffentlichungstag und Bekanntmachung des Hinweises auf die Patenterteilung: **26.06.2024**
(21) Anmeldenummer: 21758354.1
(22) Anmeldetag: 05.08.2021
(51) Int. Cl.: B05D 1/28, B05D 1/00, B60B 21/00, B60B 30/00

(54) **VERFAHREN ZUM DYNAMISCHEN HORNUMGREIFENDEN BEDRUCKEN DES FELGENHORNS EINES LEICHTMETALLRADES UND HORNUMGREIFEND BEDRUCKTES FAHRZEUGRAD**
METHOD FOR DYNAMIC FLANGE-ENCOMPASSING PRINTING OF THE RIM FLANGE OF AN ALLOY WHEEL, AND VEHICLE WHEEL WITH FLANGE-ENCOMPASSING PRINT
PROCÉDÉ D'IMPRESSION DYNAMIQUE TOUT AUTOUR DU REBORD D'UN REBORD DE JANTE D'UNE ROUE EN ALLIAGE, ET ROUE DE VÉHICULE POURVUE D'UNE IMPRESSION DE REBORD

(30) Priorität: 05.08.2020 DE 102020209842
(43) Veröffentlichungstag der Anmeldung: 14.06.2023
(73) Patentinhaber: Borbet Thüringen GmbH, 99947 Bad Langensalza (DE)
(72) Erfinder: BORBET, Peter-Wilhelm, 59964 Medebach (DE); MORITZ, Johannes, 99947 Bad Langensalza (DE); HONSEL, Claus-Michael, 59519 Möhnesee (DE)
(74) Vertreter: MERH-IP Matias Erny Reichl Hoffmann Patentanwälte PartG mbB
(86) Internationale Anmeldenummer: PCT/EP2021/071907
(87) Internationale Veröffentlichungsnummer: WO 2022/029243

(56) Entgegenhaltungen:
- US-A1- 2005 241 950
- US-A1- 2009 283 221
- US-A1- 2012 019 047
- US-A1- 2016 001 591
- US-A1- 2018 257 428

## Beschreibung

Die vorliegende Offenbarung betrifft ein Verfahren zum hornumgreifenden Bedrucken eines äußeren Felgenhorns eines Kraftfahrzeugrades (kurz: Rad), das bevorzugt ein Metallrad und besonders bevorzugt ein Leichtmetallrad ist, sowie ein entsprechend hornumgreifend bedrucktes Fahrzeugrad.

Es handelt sich bei dem hier beschriebenen Verfahren bevorzugt um ein dynamisches Verfahren, bei dem die Druckwalze während des gesamten Druckvorgangs auf der Oberfläche des Felgenhorns verbleibt, während das Rad kontinuierlich rotiert wird. Zudem kann das Rad während des Druckvorgangs kontinuierlich aus einer horizontalen Position über eine vertikale Position hinaus verschwenkt werden, wodurch die hornumgreifende Bedruckung erzielt wird.

Bis dato sind Leichtmetallräder mit einer Farbgebung des Felgenhorns bekannt, bei denen die Farbgebung des Felgenhorns von der Radgrundfarbe bzw. der Felgengrundfarbe abweicht. Bislang wird die Lackierung des Felgenhorns der vorgenannten Räder derart durchgeführt, dass das Rad nach der Lackierung eine ringförmige Bedruckung der äußeren, an die Speichen anschließende Oberfläche des Felgenhorns aufweist. Diese Räder weisen somit eine eindimensionale Bedruckung in Form eines Ringes auf der äußeren Felgenhornoberfläche auf. Aufgrund der nicht bedruckten Oberfläche der Stirn- und Innenseite des Felgenhorns entsteht jedoch zwischen der bedruckten Oberfläche und dem Reifen ein sichtbarer "Ring" in der Grundfarbe der Felge, der den Gesamteindruck des Rades stört. Bislang ist ein manuelles Nacharbeiten notwendig, um das Felgenhorn soweit zu lackieren, dass die Felgengrundfarbe nicht zwischen dem montierten Reifen und des andersfarbigen Felgenhorns sichtbar wird. Die Produktion bzw. Herstellung von Fahrzeugrädern ist somit noch nicht ausreichend automatisiert, was zu Nachteilen bei der Herstellungszeit und -effizienz führen kann.

US 2018/257428 A1 beschreibt eine Fahrradfelge. Diese umfasst einen Reifenbefestigungsabschnitt, einen inneren Umfangsabschnitt, einen ersten Seitenabschnitt, einen zweiten Seitenabschnitt und eine erste berührungsfreie gedruckte Ablagerung. Der innere Umfangsbereich ist radial einwärts von dem Reifenbefestigungsbereich in Bezug auf eine Rotationsmittelachse der Fahrradfelge vorgesehen. Der erste Seitenabschnitt weist eine erste gekrümmte Oberfläche auf. Die erste berührungslos gedruckte Ablagerung ist zumindest teilweise auf der ersten gekrümmten Oberfläche vorgesehen. Eine erste tangentiale Linie ist auf der ersten gekrümmten Oberfläche definiert, in der die erste berührungslos gedruckte Ablagerung vorgesehen ist. Ein erster Oberflächenwinkel wird durch die erste tangentiale Linie und eine Bezugsebene senkrecht zur Rotationsmittelachse definiert. Der erste Oberflächenwinkel ist größer als 30 Grad.

US 2016/001591 A1 beschreibt ein Fahrzeugrad-Dekorationsverfahren zum Dekorieren einer dreidimensional geformten Raddesign-Oberfläche eines Fahrzeugrades, das mit einer Felge und einer Scheibe mit einer Vielzahl von Speichen versehen ist, wobei die Raddesign-Oberfläche in einem Zustand, in dem das Fahrzeugrad an einem Fahrzeug montiert ist, von außen sichtbar ist. Es umfasst: Veranlassen eines Spenders, sich in den jeweiligen Richtungen von drei Achsen oder fünf Achsen entlang und relativ zu der Raddesign-Oberfläche in Übereinstimmung mit einem NC-Programm zu bewegen; und Austragen und Auftragen einer Lösemittelfarbe auf die Raddesign-Oberfläche, während sowohl eine Vorschubgeschwindigkeit als auch eine Farbaustragsmenge gesteuert werden, um eine dekorative Schicht auf der Raddesign-Oberfläche zu bilden.

US 2005/241950 A1 beschreibt ein Verfahren zur Bildung einer Beschichtung auf einem Rad, wobei die Struktur der Beschichtung mindestens eine Anzeigezone auf einer Seitenwand des Rades und mindestens eine in dem Rad definierte Vertiefungsmarkierung umfasst. Eine galvanische Schicht wird auf dem Rad mit Ausnahme der Vertiefungsmarkierung gebildet, eine Farbschicht wird auf der Vertiefungsmarkierung gebildet und eine Schutzschicht wird auf der Farbschicht gebildet. Eine Pulvermasse wird auf ein Rad gestreut und dann wird eine Farbschicht mit der gewünschten Farbe auf den Radkörper gestreut. Auf die Farbschicht wird eine Schutzschicht aus Emaille, die zum größten Teil aus Harz besteht, aufgebracht. Die Schutzschicht und die Farbschicht in der Anzeigezone werden durch Oberflächendrehen entfernt, und nach dem Oberflächendrehen wird durch Galvanisieren des Rades eine galvanische Schicht gebildet.

US 2009/283221 A1 beschreibt eine einzellige Arbeitsstation zur Bearbeitung einer Reifen-Rad-Baugruppe. Die Einzelzellen-Arbeitsstation umfasst eine Seifen-Unterstation. Die Einseif-Unterstation umfasst ein Gehäuse, das durch eine Stützfläche und eine oder mehrere Wände, die sich von der Stützfläche aus erstrecken, definiert ist, und eine Vielzahl von Flüssigkeitsabgabeabschnitten, die sich von der Stützfläche aus erstrecken.

US 2012/019047 A1 beschreibt ein Verfahren zur Herstellung von farbbeschichteten Kraftfahrzeugradkomponenten und Kraftfahrzeugrädern, wobei der Metallkörper zunächst zumindest in zu beschichtenden Bereichen spanend bearbeitet wird, anschließend mindestens zwei Lackschichten nacheinander aufgetragen werden und mindestens eine Lackschicht in einem Teilbereich des Rades spanend entfernt wird.

Es liegt die technische Aufgabe vor, ein Verfahren zum Bedrucken des Felgenhorns einer Leichtmetallfelge bereitzustellen, welches eine maschinelle hornumgreifende Bedruckung des Felgenhorns ermöglicht und damit den oben beschriebenen Nachteil vermeidet.

Die Aufgabe wird von dem Verfahren gemäß dem unabhängigen Patentanspruch gelöst. Bevorzugte technische Weiterentwicklungen werden von den abhängigen Patentansprüchen beschrieben.

Das beanspruchte Verfahren zum hornumgreifenden Bedrucken eines Felgenhorns eines Fahrzeugrades, bevorzugt eines Metallrades und besonders bevorzugt eines Leichtmetallrades, mit einer Radscheibe und einer Felge kann die nachfolgend beschriebenen Schritte umfassen, die nicht zwingend in der aufgeführten bevorzugten Reihenfolge des Anspruchs bzw. der nachfolgenden Erläuterung durchgeführt werden müssen.

Der Begriff "hornumgreifend" beschreibt hier, dass das Felgenhorn nicht nur auf der äußeren Oberfläche des Rades bedruckt wird, sondern auch auf einer stirnseitigen Oberfläche des Felgenhorns sowie auf der inneren Oberfläche des Felgenhorns. Als "äußere Oberfläche" des Felgenhorns soll dabei die Oberfläche verstanden werden, die in axialer Richtung des Rades von der Felgenmittelachse abgewandt ist bzw. vom Fahrzeug abgewandt ist. Unter der "inneren Oberfläche" des Felgenhorns soll die Fläche verstanden werden, die in axialer Richtung des Rades der Felgenmittelachse zugewandt ist bzw. dem Fahrzeug zugewandt ist. Als "Stirnseite" oder "stirnseitige Oberfläche" des Felgenhorns soll der schmale Bereich des Felgenhorns im Querschnitt der Felge bezeichnet werden, der zwischen der inneren und äußeren Oberfläche angeordnet ist (senkrecht zu der inneren und äußeren Oberfläche des Felgenhorns angeordnet ist).

Zu den Verfahrensschritte: In einem Schritt kann das Leichtmetallrad auf einer Radaufnahmeeinrichtung fixiert werden. Die Radaufnahmeeinrichtung kann bevorzugt Teil einer Dreh- und Schwenkeinheit sein und/oder kann mit dieser verbunden sein. Besonders bevorzugt kann die Radaufnahmeeinrichtung das darauf fixierte Rad rotieren und verschwenken; bspw. mittels eines Motors oder dgl.

Das Rad kann bezüglich seiner Anordnung relativ zu der Radaufnahmeeinrichtung bevorzugt derart fixiert werden, dass die Radscheibe des Leichtmetallrades frei zugänglich angeordnet ist. Diese Anordnung kann bevorzugt bedeuten, dass die Radscheibe des Leichtmetallrades von einer Auflagefläche eines Drehtisches abgewandt angeordnet ist. Dabei kann das Rad bevorzugt orthogonal zu einer z-Achse der Dreh- und Schwenkeinheit angeordnet sein. Mit anderen Worten können die z-Achse und die Rotationsachse des Rades parallel und besonders bevorzugt übereinander liegend angeordnet werden. Die Anordnung "frei zugänglich" nochmals mit anderen Worten beschrieben kann umfassen, dass das Leichtmetallrad mit der Radscheibe nach oben fixiert wird. Dabei kann ein inneres Felgenhorn der Felge des Leichtmetallrades zu der Radaufnahmeeinrichtung zugewandt sein kann.

Die Richtung "oben" soll hier insbesondere "in Z-Richtung" in einem virtuellen Koordinatensystem bedeuten, wobei das virtuelle Koordinatensystem mit seiner X-Y-Ebene parallel zu der Horizontalen angeordnet sein kann und die Z-Richtung aus dieser Ebene herauszeigt.

Als "inneres" Felgenhorn soll dasjenige der beiden Felgenhörner bezeichnet werden, welches - wenn das Rad an einem Fahrzeug montiert ist - im Querschnitt der Felge auf einer der Fahrzeuglängsmittelebene zugewandten/näheren Seite angeordnet ist.

Die Dreh- und Schwenkeinheit kann beispielsweise und bevorzugt eine vertikale 5-Achsen-Einheit sein, d.h., dass der Drehtisch eine translatorische Bewegung in Richtung der x-, y- und z-Achse der Dreh- und Schwenkeinheit ausführen und um die x- und z-Achse rotieren kann. Dabei sollen die x- und y-Achse der Dreh- und Schwenkeinheit die Achsen bezeichnen, welche die horizontale Ebene abbilden, d.h., sie sollen in der horizontalen Ebene senkrecht zueinander angeordnet sein und somit mit der X-Y-Ebene des virtuellen Koordinatensystems übereinstimmen. Die z-Achse soll die Achse bezeichnen, die senkrecht zu der aus x- und y-Achse aufgespannten Ebene und somit vertikal angeordnet ist. Eine 6-Achsen-Dreh- und Schwenkeinheit, die zusätzlich eine Rotation der Radaufnahmeeinrichtung, bspw. eines Drehtisches, um die y-Achse erlaubt kann ebenfalls verwendet werden. Die Dreh- und Schwenkeinheit kann in einer besonders wenig komplexen Ausführung zumindest eine Schwenkachse und eine Rotationsachse aufweisen, so dass das darauf montierte Rad um zumindest eine Achse rotiert werden kann und um zumindest eine Achse verschwenkt werden kann.

Ferner kann auch die Radaufnahmeaufrichtung auch als verschwenkbarer und rotierbarer Zapfen oder Dorn oder dgl. vorgesehen sein und derart die Radnabe aufnehmen, dass das Rad mit der Radaufnahmeeinrichtung (gemeinsam) rotiert und verschwenkt werden kann.

Bevorzugt kann eine Ausgangsposition für das hier beschriebene Verfahren sein, dass das Rad in einer horizontalen Position angeordnet sein, d.h. dass der Schwenkwinkel des Rades 0°zur horizontalen Ebene beträgt bzw. dass die äußere Oberfläche des Rades parallel zu der X-Y-Ebene des virtuellen Koordinatensystem angeordnet ist. Mit anderen Worten kann der Begriff "frei zugänglich" auch insbesondere umfassen und besonders bevorzugt bedeuten, dass das Rad mit nach oben ausgerichteter Radscheibe angeordnet ist und besonders bevorzugt die äußere Radoberfläche gleichzeitig parallel zu der Horizontalen (X-Y-Ebene des virtuellen Koordinatensystems) angeordnet ist.

Nachdem der Drehtisch mit dem fixierten Rad durch Translation entlang der x- und y-Achsen eine vorbestimmte horizontale Position eingenommen hat oder bereits nach der Montage des Rades in der Position angeordnet war, kann eine Druckwalze gegenüber einer äußeren Oberfläche eines äußeren Felgenhorns der Felge in einem vorbestimmten Abstand zur Oberfläche des Felgenhorns positioniert werden. Alternativ dazu kann die Druckwalze auch zuerst gegenüber einer inneren Oberfläche des äußeren Felgenhorn der Felge positioniert werden. Dies hängt von der nachfolgend gewählten Schwenkrichtung ab. Ebenfalls kann die Oberfläche auch zwischen der inneren und äußeren Oberfläche gewählt werden, so dass die Schwenkbewegung in zwei Richtungen erfolgen muss, um hornumgreifend zu drucken. Bei letzterer Option ist allerdings geringfügig nachteilig, dass ein Teilbereich des Druckbereichs mehrfach überstrichen wird und somit der Farbauftrag in diesem Teilbereich genauer gesteuert werden müsste.

Die Positionierung der Druckwalze erfolgt durch translatorische Bewegungen derselben in x, y und/oder z-Richtung. Als "äußeres" Felgenhorn soll dasjenige der beiden Felgenhörner bezeichnet werden, das - wenn das Rad an einem Fahrzeug montiert ist - im Querschnitt der Felge auf einer der Fahrzeuglängsmittelebene abgewandten/ferneren Seite angeordnet ist. Aus der Position des Leichtmetallrades auf dem Drehteller ergibt sich, dass die Druckwalze gegenüber der äußeren Oberfläche des äußeren Felgenhorns positioniert wird. Die "äußere Oberfläche des äußeren Felgenhorns" bezeichnet dabei die in axialer Richtung von der Felgenmittelachse abgewandte, an die Speichen der Radscheibe anschließende Oberfläche des äußeren Felgenhorns. Der vorbestimmte Abstand kann bevorzugt in einem Bereich von 2 mm bis 40 mm liegen und besonders bevorzugt in einem Bereich von 5 mm bis 30 mm liegen. Dadurch kann die Druckwalze zur äußeren Oberfläche des Felgenhorns vorpositioniert werden, wodurch die Genauigkeit der Startposition des Druckvorgangs erhöht wird. Die Druckwalze kann einen vorbestimmten Durchmesser und eine vorbestimmte Breite aufweisen. Bevorzugt liegt der Durchmesser der Druckwalze im Bereich von 100 mm bis 350 mm, besonders bevorzugt im Bereich von 150 mm bis 300 mm und ganz besonders bevorzugt im Bereich von 180 mm bis 250 mm. Die Breite der Druckwalze liegt bevorzugt im Bereich von 10 bis 100 mm, besonders bevorzugt im Bereich von 25 mm bis 75 mm und ganz besonders bevorzugt im Bereich von 30 mm bis 60 mm.

Weiterhin kann eine Rotation des Rades gestartet werden. Beispielsweise dadurch, dass eine Rotation des Drehtisches um die z-Achse der Dreh- und Schwenkeinheit gestartet wird.

Ferner kann die Druckwalze auf der äußeren Oberfläche des äußeren Felgenhorns positioniert werden, d.h. mit dieser in Kontakt gebracht werden. Daraufhin kann der Druckvorgang gestartet werden. Dies kann bevorzugt dadurch erfolgen, dass eine Druckfarbe zugeführt wird und die Druckwalze aktiv in Rotation versetzt wird (z.B. mittels eines Antriebs für die Druckwalze) und/oder aufgrund der Radrotation passiv mitrotiert werden kann.

Die Radaufnahmeeinrichtung, bspw. der Drehtisch oder der rotierbare Raddorn, kann während des gesamten Druckvorgangs (nach dem Anfahren und vor dem Auslaufen) bevorzugt mit konstanter Geschwindigkeit rotieren. Bevorzugt wird die Umdrehungsgeschwindigkeit auf einen konstanten Wert im Bereich 5 bis 50 U/min geregelt, besonders bevorzugt im Bereich von 20 bis 40 U/min. Ebenso kann die Druckwalze während des gesamten Druckvorgangs (nach dem Anfahren und vor dem Auslaufen) mit konstanter Geschwindigkeit rotiert werden, d.h. entsprechend geregelt werden. Bevorzugt werden beide Geschwindigkeiten aufeinander abgestimmt, wodurch eine weitere Optimierung der Druckqualität erreicht werden kann, insbesondere durch einen noch gleichmäßigeren Farbauftrag.

Besonders bevorzugt werden die Umdrehungsgeschwindigkeiten des Drehtisches und der Druckwalze derart geregelt, dass an deren Kontaktpunkt/-fläche die Differenzgeschwindigkeit minimiert ist und ganz besonders bevorzugt null ist. In diesem Zusammenhang wird bevorzugt die Geschwindigkeit Drehtischrotation vorgegeben und die Rotationsgeschwindigkeit der Druckwalze folgt.

Die Zufuhr der Druckfarbe kann mittels eines offenen Farbsystems bereitgestellt werden, bei dem die Farbe in einer offenen Farbwanne liegt. In der Farbwanne kann sich eine Rolle (Farbgeber-Rolle) befinden, an die ein walzenförmiges Druckklischee anschließen kann, das wiederum in Kontakt zu der Druckwalze stehen kann. Durch Rotieren der Rolle in der Farbwanne kann die Farbe auf das walzenförmige Druccklischee aufgebracht werden. Überschüssige Farbe kann mit Hilfe eines sogenannten Rakelmessers abgestreift (abgerakelt) werden, insbesondere kann diese mit Hilfe einer Restfarbabholung, umfassend eine Metallwalze (optional erwärmt) und ein Rakelmesser von der Druckwalze entfernt werden. Durch den Rollkontakt zwischen der Klischeewalze und der Druckwalze kann die auf dem Druckklischee bereitgestellte Farbmenge auf die Druckwalze übertragen werden. Die oben beispielhaft beschriebene Farbzufuhr kann auch anders ausgeführt werden.

Nachdem die äußere oder innere Felgenhornoberfläche einmal (um die Rotationsachse des Rades 360° herum) umlaufend bedruckt ist, kann der Drehtisch aus der horizontalen Position bis zu einem vorbestimmten maximalen Schwenkwinkel kontinuierlich verschwenkt werden. Bevorzugt erfolgt die Verschwenkung um die x-Achse der Dreh- und Schwenkeinheit bzw. die X-Richtung des virtuellen Koordinatensystems.

Je nach Farbsystem können mehrere Drucklagen vorgesehen sein. Beispielsweise kann bei so bezeichneten niedrigdeckenden Farbsystemen bis zu acht Lagen vorgesehen sein. Alternativ oder zusätzlich kann die Anzahl der Drucklagen auch von der Viskosität der Farbe abhängig vorbestimmt werden. Eine Drucklage wird hier als das Ergebnis eines einmaligen Überstreichens einer Fläche verstanden.

Der vorbestimmte maximale Schwenkwinkel kann größer/gleich 90° sein, d.h. der Drehtisch kann über die senkrechte Position des Rades hinaus verschwenkt werden. Bevorzugt liegt der maximale Schwenkwinkel im Bereich von 90° bis 150°, besonders bevorzugt im Bereich von 120° bis 140°.

Unter "kontinuierlich verschwenkt" soll insbesondere verstanden werden, dass der Schwenkvorgang aus der horizontalen Position des Rades bis zu dem vorbestimmten maximalen Schwenkwinkel nicht unterbrochen/gestoppt wird und dass der Schwenkvorgang mit maschinell kontrollierter Geschwindigkeit erfolgt. Die Steuerung der Schwenkgeschwindigkeit kann entweder eine konstante oder variable Geschwindigkeit ermöglichen, die je nach Horngeometrie des zu bedruckenden Rades, Deckungsvermögen des Farbsystems und dessen Viskosität eingestellt werden kann. Steuerungsziel ist insbesondere eine homogen dicke/starke und vollständig abdeckende Druckschicht zu erzielen, wobei insbesondere die genannten drei Parameter beachtlich sein können, um die gewünschte Schwenkgeschwindigkeit einzustellen bzw. anzusteuern. Es wird folglich ein gleichmäßiger Farbauftrag auf die einzelnen Oberflächen des Felgenhorns ermöglicht.

Insbesondere die hier beschriebene und beanspruchte Kombination aus (bevorzugt gleichmäßigem) Verschwenken und gleichzeitigem Rotieren des Rades erlaubt es, eine hornumgreifende Bedruckung zu erzielen. Die damit im Zusammenhang stehenden Schritte des hier beschriebenen Verfahrens sind somit Teil der technischen Verbesserung der hier beschriebenen Offenbarung.

Die Position der Druckwalze im Raum kann während des gesamten Schwenkvorgangs unverändert bleiben. Durch die Schwenkbewegung des Rades bzw. der Radaufnahmeeinrichtung mit dem montierten Rad (bspw. ein Drehtisch), die über einen Winkel von 90° zu der horizontalen Ebene der Dreh- und Schwenkeinheit hinausgeht, können zunächst die Stirnseite und danach die Innenseite des äußeren Felgenhorns mit der Druckwalze in Kontakt gebracht werden (oder umgekehrt). Mit anderen Worten wird der hornumgreifende Druck durch die Schwenkbewegung in Verbindung mit der (bevorzugt kontinuierlichen) Rotation des Rades und/oder des Drehtisches ermöglicht.

Wenn die im montierten Zustand des Reifens auf dem Rad sichtbaren Oberflächen des äußeren Felgenhorns vollständig bedruckt sind, kann der Druckvorgang beendet werden. Dazu kann die Druckwalze von einer inneren oder äußeren Oberfläche des äußeren Felgenhorns abgehoben und die Zufuhr der Druckfarbe gestoppt werden. Die Oberfläche, von der die Druckwalze abgehoben wird, kann bevorzugt die Oberfläche sein, die entgegensetzt zu der Oberfläche angeordnet ist, bei der der Druckvorgang gestartet wurde; d.h. startete der Druck an der äußeren Oberfläche des Horns, so liegt die Oberfläche, an der der Druck beendet wird auf der inneren Oberfläche des Horns und umgekehrt.

Nach dem der Druck vollständig ausgeführt wurde, kann die Rotation des Rades und/oder des Drehtisches gestoppt und die Druckwalze bevorzugt vertikal nach oben in eine vorbestimmte Position verfahren werden. Die vorbestimmte (End)-Position der Druckwalze kann dabei so gewählt werden, dass das nachfolgende Rückschwenken des Drehtisches in die horizontale Ausgangsposition ungestört erfolgen kann. Zur Restfarbenabholung aus der Druckwalze kann diese noch für eine vorbestimmte Zeit weiter rotieren bis sie nach der Reinigung gestoppt werden kann.

Durch die beschriebenen Verfahrensschritte wird ein maschinell durchgeführter gleichmäßiger Farbauftrag auf der gesamten im montierten Zustand des Rades sichtbaren Felgenhornoberfläche erzielt. Insbesondere können mit dem beschriebenen Verfahren auch die Stirnseite und die Innenseite des Felgenhorns mit hoher Qualität bedruckt werden, ohne dass dies zu erhöhtem Aufwand durch bspw. manuelles Nacharbeiten führte. Die Radproduktion kann somit weiter automatisiert werden und damit auch effizienter und beschleunigt werden.

Ferner kann eine Breite eines Druckstreifens auf der Druckwalze gemäß einem weiteren Aspekt größer als eine Auflagefläche der Druckwalze auf dem Felgenhorn sein. Mit anderen Worten kann die Druckwalze jeweils nur mit einem Teil des von der Klischeewalze übertragenen Druckstreifens auf der Felgenhornoberfläche aufliegen. Unter "Druckstreifen" soll dabei die Fläche auf dem Umfang der Druckwalze verstanden werden, die mit Druckfarbe bedeckt ist bzw. auf die Druckfarbe von der Klischeewalze übertragen wurde. Durch die Breite des Druckstreifens ist gewährleistet, dass die Auflagefläche der Druckwalze während des Schwenkvorgangs nicht aus dem Bereich des Druckstreifens herauswandert.

Ferner kann die Druckwalze gemäß einem weiteren Aspekt eine Tampondruckwalze sein, die Silikon enthalten kann. Besonders bevorzugt wird elastisches Silikonmaterial. Eine Tampondruckwalze, die sich bevorzugt durch das elastische Material von einer starren Druckwalze unterscheiden kann, bietet den Vorteil der Verformbarkeit des Tampons bei der Druckübertragung. Dadurch können auch unebene Oberflächen mit Kurvenradien und Vertiefungen - wie im vorliegenden Fall des Felgenhorns gegeben - gleichmäßig bedruckt werden. Des Weiteren bietet die Silikonmasse der Tampondruckwalze (kurz nachfolgend auch "Tampon) den Vorteil, dass die Druckfarbe sehr gut aufgenommen und wieder abgegeben werden kann.

Die Härte und damit die elastische Verformbarkeit der Tampondruckwalze beim Rotationstampondruck kann derart ausgewählt bzw. vorbestimmt sein, dass die Walze gleichmäßig auf der zu bedruckenden Oberfläche abrollen kann. Es hat sich als vorteilhaft herausgestellt, wenn die Tampondruckwalze eine Härte im Bereich von 18 Shore A bis 60 Shore A aufweist und besonders bevorzugt eine Härte im Bereich von 30 Shore A bis 50 Shore A. Die genannten Härtebereiche ergeben auf den zu bedruckenden Fahrzeugradoberflächen ein optimales Druckbild.

Gemäß einem weiteren Aspekt kann die Druckwalze mit einer vorbestimmten Druckkraft im Bereich von 30 N bis 400 auf das Felgenhorn gedrückt werden, wobei der Druckwert abhängig von Tamponform und Geometrie des Horns einstellbar bzw. auswählbar ist. Die vorbestimmte Druckkraft (Anpresskraft) der Druckwalze auf die Felgenhornoberfläche kann dabei abhängig von der Härte der Druckwalze und dem Farbsystem sein. Eine härtere Druckwalze kann mit einer höheren Druckkraft auf die Felgenhornoberfläche gepresst werden als eine weichere Druckwalze. Eine Druckmessung ist in einer bevorzugten Alternative nicht notwendig, wenn der Anpressdruck des Tampons über den Verfahrweg, z.B. des Tampons, eingestellt wird, wobei der Zusammenhang zwischen dem benötigen Druck und dem Verfahrweg vorbekannt und entsprechend der Druck eingestellbar sein kann.

Gemäß einem weiteren bevorzugten Aspekt kann das kontinuierliche Verschwenken des Drehtisches nach einer vorbestimmten Zeit starten, wobei der Wert der vorbestimmten Zeit abhängig von dem Farbsystem sein kann. Bei einem geringeren Deckungsvermögen der Farbe (so genannte niedrigdeckende Farbe oder Farbsystem) kann es notwendig sein, dass die Druckwalze länger auf der äußeren Oberfläche des Felgenhorns verbleibt/rotiert, um dort ein ausreichendes Druckergebnis zu erlangen, bevor der Schwenkvorgang starten und die Druckwalze mit den weiteren Oberflächen des Felgenhorns in Kontakt gebracht werden kann. Bevorzugt liegt die vorbestimmte Zeit von Beginn des Druckvorgangs bis zum Starten der Verschwenkung des Drehtisches im Bereich von 0,3 s bis 50 s und besonders bevorzugt im Bereich von 5 s bis 30 s.

Gemäß einem weiteren bevorzugten Aspekt kann das Rad und/oder die Radaufnahmeeinrichtung, z.B. der Drehtisch oder die rotierbare Raddorn, die wie ein rotierbarer Dorn zur Aufnahme des Rades ausgeführt sein kann, mit einer vorbestimmten Drehzahl rotieren, wobei auch der Wert der vorbestimmten Drehzahl abhängig von der Viskosität der Druckfarbe sein kann. Die Rotationsgeschwindigkeit kann, gemeinsam mit der Rotationsgeschwindigkeit der Walze die Zeitdauer bestimmen, in der die Auflagefläche der Druckwalze auf der gegenüberliegenden Teilfläche des Felgenhorns verweilt. Um die in der Druckwalze gespeicherte Druckfarbe gleichmä-ßig und deckend auf die Oberfläche des Felgenhorns aufzubringen, kann bei niedriger Viskosität der Druckfarbe der Drehtisch schneller rotieren während er bei hoher Viskosität langsamer rotieren kann, wobei die bevorzugten Viskositätswerte im Bereich von 500 bis 10000 mPas liegen.

Gemäß einem weiteren bevorzugten Aspekt erfolgt das Verschwenken mit einer vorbestimmten Schwenkgeschwindigkeit und kann besonders bevorzugt automatisiert gesteuert werden. Der Wert der vorbestimmten Schwenkgeschwindigkeit kann dabei abhängig von der Viskosität und/oder dem Deckungsvermögen der Druckfarbe sein. Bezüglich der Anpassung der Schwenkgeschwindigkeit an das Farbsystem können ähnliche Gesichtspunkte wie bei der Rotationsgeschwindigkeit des Drehtisches in Betracht gezogen werden.

Gemäß einem weiteren bevorzugten Aspekt kann, nach Erreichen des vorbestimmten maximalen Schwenkwinkels, die Druckwalze nach einer vorbestimmten Zeit von der inneren Felgenhornoberfläche (oder der äußeren Oberfläche, falls der Vorgang des Druckens an der inneren Oberfläche gestartet wurde) abgehoben werden. Der Wert der vorbestimmten Zeit kann abhängig von dem Deckungsvermögen der Druckfarbe sein. Mit anderen Worten, um eine ausreichende Farbabdeckung auch auf der Innenseite des Felgenhorns zu erreichen, kann die Druckwalze in der Endposition des Schwenkvorgangs für eine vorbestimmte Zeit auf der inneren Oberfläche des Felgenhorns verbleiben/rotieren. Bei geringerem Deckungsvermögen der Farbe kann die Druckwalze länger auf der inneren Oberfläche des Felgenhorns verbleiben, während bei höherem Deckungsvermögen der Druckvorgang schneller abgeschlossen werden kann. Bevorzugt liegt die vorbestimmte Verweilzeit der Druckwalze auf der inneren Oberfläche des Felgenhorns, von Erreichen des maximalen Schwenkwinkels bis zum Abheben der Druckwalze, im Bereich von 0,3 s bis 50 s, besondere bevorzugt im Bereich von 1 s - 35 s.

Gemäß einem weiteren Aspekt kann das Druckgemisch (Drucksystem) einen Verdünner und die Druckfarbe umfassen. Die Druckfarbe kann eine Ein- oder Zweikomponentenfarbe sein. Letzteres hat sich als besonders vorteilhaft im Hinblick auf die sichere Haftung des Drucks auf der metallischen Oberfläche des Felgenhorns bzw. einer Beschichtung der metallischen Oberfläche und der Beständigkeit gegenüber Umwelteinflüssen erwiesen. Die Zweikomponentenfarbe kann bevorzugt eine lösemittelbasierte Farbe sein. Das Mischungsverhältnis von Farbe und Härter kann bevorzugt im Bereich von 4:1 bis 10:1 Bevorzugt wird die Viskosität der Druckfarbe bzw. des Farbsystems im Bereich von 500 bis 10000 mPas gehalten bzw. eingestellt.

Ein Anteil Verdünner in dem Druckgemisch kann während des Druckvorgangs konstant erhalten werden. Dazu kann während des Druckvorgangs Verdünner entsprechend dessen Verdunstungsmenge nachgefüllt werden, um den Anteil von Druckfarbe und Verdünner im Druckgemisch konstant zu halten. Der Anteil Verdünner kann von 0 Gewichts% bis zu bevorzugt 50 Gewichts% des Farbsystems/Druckfarbe betragen. Unter dem Begriff "Verdünner" soll dabei ein Lösungsmittel verstanden werden, das dem bereits in der Farbe verwendeten Lösungsmittel entspricht. Wird das Verhältnis zwischen Verdünner und Druckfarbe im Wesentlichen konstant gehalten, so hat sich dies als technisch vorteilhaft erwiesen, um eine Regelung der Steuerungsparameter, u.a. Rotationsgeschwindigkeiten des Tisches und der Druckwalze, möglichst eingriffsarm zu gestalten. Die Regelung wird dadurch in ihrer Komplexität reduziert und gleichzeitig kann ein optimaler Farbauftrag über den gesamten Druckvorgang hinweg erzielt werden.

Wie bereits erläutert, beeinflusst unter anderem die Viskosität der Druckfarbe eine Vielzahl von relevanten Einstellparametern des Druckvorgangs (Rotationsgeschwindigkeit des Rades und der Druckwalze, Schwenkgeschwindigkeit des Drehtisches etc.). Ferner, um die Vielzahl von Parametern, die sich zudem wechselseitig beeinflussen können, nicht fortlaufend nachjustieren zu müssen, hat es sich als vorteilhaft herausgestellt, die Viskosität der Druckfarbe während des Druckprozesses möglichst konstant zu halten. Dies kann durch eine kontinuierliche Zugabe des Verdünners erfolgen, da die Viskosität der Farbe in der offenen Farbwanne durch Verdunstung des Lösungsmittels kontinuierlich zunimmt. Die kontinuierliche Zugabe des Verdünners kann in Abhängigkeit von den Umgebungsbedingungen, wie Temperatur und Luftfeuchte erfolgen. Beispielsweise kann eine hohe Umgebungstemperatur eine höhere Zugabe an Verdünner erfordern als eine niedrige Umgebungstemperatur. Die zugegebene Menge an Verdünner kann dabei bevorzugt im Bereich von 0 ml/h bis 300 ml/h liegen.

Ferner wird ein Fahrzeugrad aufweisend eine Radscheibe und eine Felge beansprucht, wobei die Felge des Fahrzeugrades zumindest ein äußeres Felgenhorn aufweisen kann und dieses Felgenhorn eine äußere Oberfläche im Bereich der Vorderseite des Rades, eine Scheitelfläche und eine innere Oberfläche an der Rückseite des Felgenhorns aufweisen kann. Infolge der Anwendung des oben beschriebenen Druckverfahrens weisen jeweils zumindest Teilbereiche bzw. Teilabschnitte der äu-ßeren Oberfläche, der Scheitelfläche und der inneren Oberfläche des äußeren Felgenhorns eine Druck- bzw. Farbschicht auf, die bevorzugt von der Grundfarbe (falls vorhanden) des Fahrzeugrades abweichend ist. Somit weist das so hergestellte Rad den andersfarbigen (zu der Radgrundfarbe) ausgeführten Ring im äußeren Durchmesserbereich der Vorderseite des Rades auf und dieser Ring bzw. diese Farbschicht ist bis zu dem Reifenübergang durchgehend vorliegend, d.h. bis hinter den Scheitel des äußeren Felgenhorns.

Zusammenfassend bietet die vorliegende Offenbarung somit ein Verfahren zur hornumgreifenden Bedruckung des äußeren Felgenhorns, mit dem auch die Oberflächen der Stirn- und Innenseite des Felgenhorns insbesondere maschinell und mit geringem Zeitaufwand bedruckt werden können. Weiterhin wird auch ein entsprechend bedrucktes Fahrzeugrad beansprucht. Dar Raddesign wird deutlich aufgewertet, da die bedruckte Fläche in axialer Richtung direkt an den Reifen anschließt und kein störender Farbwechsel zur Grundfarbe des Rades auftritt. Die Produktion dieser Räder ist somit auch automatisiert und in Massenproduktion möglich.

Die Offenbarung wird im Folgenden exemplarisch mit Bezug auf die beigefügten, schematischen Zeichnungen beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.
- Fig. 1: zeigt ein hornumgreifend bedrucktes Fahrzeugrad in einer Seitenansicht.
- Fig. 2: zeigt einen Teil eines hornumgreifend bedruckten Fahrzeugrades in der Schnittansicht und einen vergrößerten Ausschnitt dazu.
- Fig. 3a-d: zeigen Schritte eines Verfahrens zur hornumgreifenden Bedruckung eines Fahrzeugrades.
- Fig. 4a-b: zeigen zwei Schritte eines Verfahrens zur hornumgreifenden Bedruckung eines Fahrzeugrades in vergrößerter Darstellung.
- Fig. 5a-b: zeigen zwei Schritte eines Verfahrens zur hornumgreifenden Bedruckung eines Fahrzeugrades in vergrößerter Darstellung.
- Fig. 6a-b: zeigen eine Perspektive und eine Schnittansicht eines Tampons zum Bedrucken des Fahrzeugrades.
- Fig. 7a-b: zeigen eine Perspektive und eine Schnittansicht eines Tampons zum Bedrucken des Fahrzeugrades.
- Fig. 8a-b: zeigen eine Perspektive und eine Schnittansicht eines Tampons zum Bedrucken des Fahrzeugrades.
- Fig. 9a-b: zeigen eine Perspektive und eine Schnittansicht eines Tampons zum Bedrucken des Fahrzeugrades
- Fig. 10: zeigt eine perspektivische Ansicht eines hornumgreifend bedruckten Fahrzeugrades und einen vergrößerten Ausschnitt.

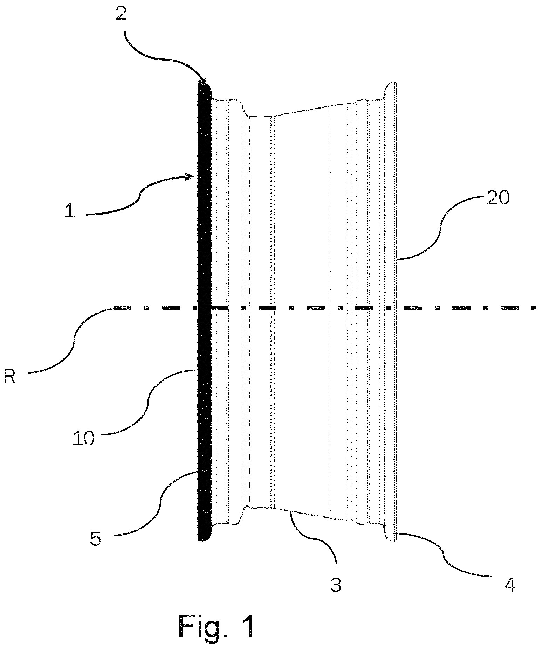

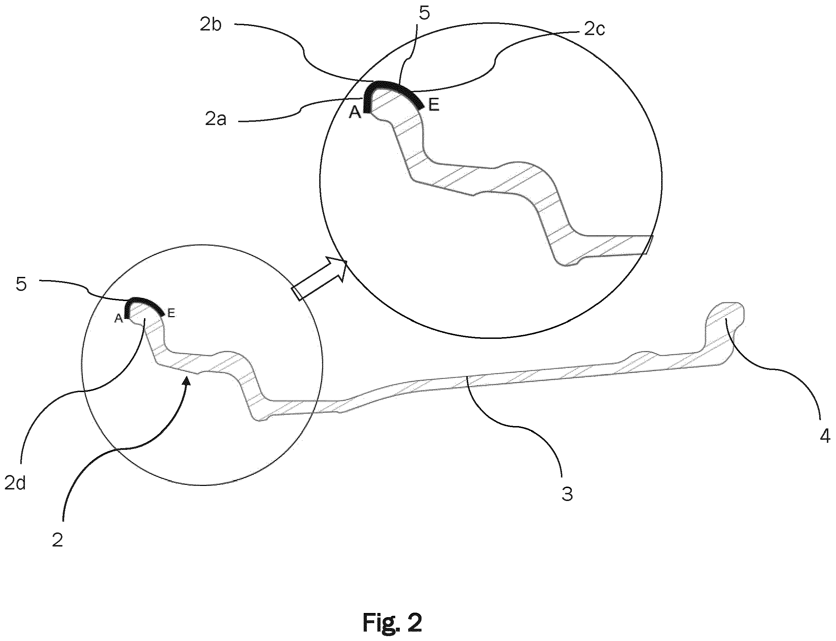

Figur 1 zeigt eine Seitenansicht eines Fahrzeugrades 1 (kurz: Rad), das bevorzugt eine Rad 1 eines Kraftfahrzeuges, beispielsweise eines Personenkraftwagen oder Lastkraftwagens, ist. Die gezeigte Darstellung gibt schematisch eine mögliche Formgebung eines vorderen bzw. äußeren Felgenhorns 2 (ein Felgenhorn wird nachfolgend alternativ auch kurz als Horn bezeichnet), eines Felgenbettes 3 und eines hinteren bzw. inneren Horns 4 wider, wobei das Rad 1 eine fahrzeugabgewandte Seite 10 und eine fahrzeugzugewandte Seite 20 aufweist, die alternativ auch als Vorderseite 10 oder Rückseite 20 des Rades 1 bezeichnet werden können. Die fahrzeugabgewandte Seite 10 weist das äußere Horn 2 auf, das hier schwarz flächig eingezeichnet ist, um den bedruckten Bereich darzustellen und hervorzuheben. Wie die Figur 1 zeigt, ist das äußere Horn 2 hornumgreifend bedruckt, was die Figur 2 noch deutlicher herausstellt. Ferner ist auch die (virtuelle) Rotationsachse R des Rades 1 eingezeichnet.

Figur 2 ist ein Teilabschnitt eines hornumgreifend bedruckten Rades 1 bspw. gemäß Figur 1, wobei hier das Felgenbett 3 und die Hörner 2 und 4 im Schnitt dargestellt sind. Das vordere Horn 2 ist mittels einer Farbschicht 5 bedruckt. Diese Farbschicht ist bevorzugt eine zusätzliche Farbschicht 5, die auf der nicht dargestellten Grundfarbschicht (nicht gezeigt) des Rades 1 aufgetragen ist. Die Farbschicht 5 zeigt die hornumgreifende Bedruckung des Rades 1, die mittels des hier beschriebenen Verfahrens automatisiert hergestellt werden kann. Die dargestellte Dicke der Farbschicht 5 ist zeichnerisch überhöht, um diese gut sichtbar zu machen. Der vergrößerte Ausschnitt der Figur 2 zeigt ferner deutlich, dass der Endbereich 2d des äußeren Horns 2 von einer Vorderseite 10 des Rades 1 bzw. von einer äußeren Oberfläche 2a des Horns 2 bis zu einer rückwärtigen Seite/hinteren Oberfläche/innenseitige Oberfläche 2c des Horns 2 mit der Farbschicht 5 gleichmäßig und durchgehend bedeckt ist; d.h. von der virtuellen Position A bis zu der virtuellen Position E, die für die Unterstützung des Zeichnungsverständnisses angegeben sind, verläuft die Farbschicht 5 über einen Scheitelbereich 2b des Rades 1 hinaus bis zu einem Punkt hinter jenem Scheitelpunkt 2b. Eine Vorderansicht des Rades 1 ergäbe somit einen ringförmigen Farbdruck im äußeren Durchmesserbereich auf der Vorderseite 10 des Rades 1, in dem Scheitelbereich 2b und zumindest auf einem Teil der innenseitigen Oberfläche 2c, der bevorzugt eine abweichende Farbe zu der Grundfarbe des übrigens Rades 1 aufweist. Bei einem auf dem Rad 1 montierten Reifen (nicht gezeigt) ist aufgrund der geometrischen Ausprägung (diese ist "hornumgreifend") der Farbschicht 5 außerdem nicht die Grundfarbe des Rades 1 zwischen dem Reifen und dem hinteren Hornbereich 2c zu erkennen, so dass ausschließlich die Farbe der Farbschicht 5 bis abschließend zum Reifen(-übergang) erkennbar ist.

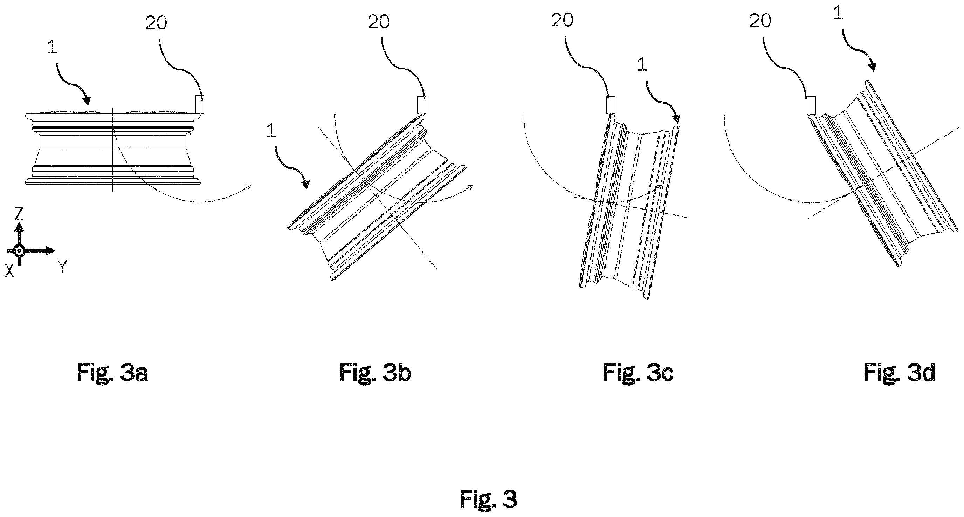

Ferner zeigen die Figuren 3 bis 5 beispielhaft einzelne Verfahrensabschnitte bzw. Schritte des dynamischen Druckvorgangs zur hornumgreifenden Bedruckung des äußeren Felgenhorns 2 eines Rades 1 bzw. bevorzugt einer Leichtmetallfelge auf bspw. einer Rotationsdruckmaschine. Insbesondere zeigen die Figuren 3 bis 5 beispielhaft einzelne Positionen des kontinuierlichen Schwenkvorgangs, der es ermöglicht, dass nicht nur eine Außenseite bzw. Vorderseite 2a des Horns 2, sondern auch die Stirnseite (im Bereich des Scheitelabschnittes 2b des Horns 2) und die Innenseite 2c des äußeren Felgenhorns 2 bedruckt werden können (hornumgreifende Bedruckung mit der Farbschicht 5). Die beispielhaft verwendbare Rotationsdruckmaschine (kurz: Maschine) und deren Bauteile und Komponenten sind hier nicht dargestellt, jedoch beispielhaft ein Rad 1, das mittels eines nicht gezeigten Dorns und/oder eines Radtellers oder dgl. von der Maschine aufgenommen werden kann, sowie ein schematisch dargestellter (Druck-)Tampon 20, der von einem nicht gezeigten Farbzuführsystem kontinuierlich mit Druckfarbe gespeist werden kann.

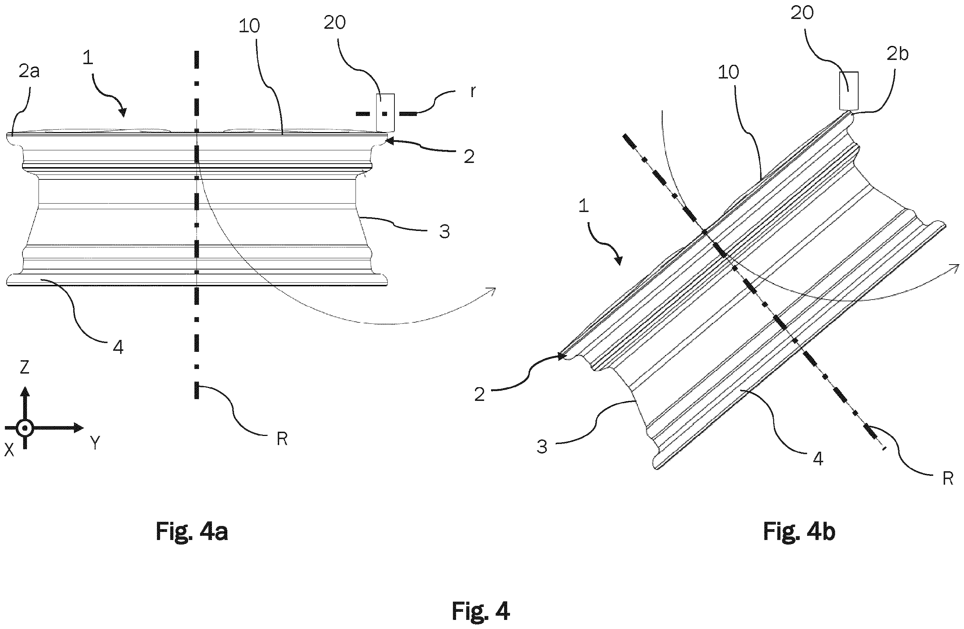

Die Figuren 3a und 4a zeigen ferner ein virtuelles Koordinatensystem, das so angeordnet ist, dass die X-Y-Ebene bevorzugt horizontal angeordnet ist und dass die Z-Richtung senkrecht aus dieser X-Y-Ebene herausragt (nach oben zeigt). Das virtuelle Koordinatensystem zeigt, dass die bevorzugte Startposition gemäß Figuren 3a und 4a eine horizontale Ausrichtung der Vorderseite 10 des Rades 1 ist bzw. eine Ausrichtung bei der die Rotationsachse R parallel zu der Z-Richtung liegt und die Vorderseite 10 des Rades 1 nach oben gerichtet ist.

Beispielsweise kann das Rad 1 auf einem nicht gezeigten Drehtisch einer Dreh- und Schwenkeinheit (nicht dargestellt) der Maschine fixiert sein, wobei auch andere Möglichkeiten denkbar sind. Alternativ oder zusätzlich kann die Dreh- und Schwenkeinheit beispielsweise ein Roboterarm mit einem Dorn oder einer Welle sein, die dazu eingerichtet ist, die Nabe des Rades 1 aufzunehmen und zwar so, dass eine Rotation des Rades ermöglicht wird. Auch kann die Druckmaschine eine andere Maschine als die hier genannte sein; z.B. könnte die Dreh- und Schwenkeinheit eine separate Maschine zu der Druckvorrichtung sein oder dgl.

Wie bereits oben dargelegt wurde, wird es bevorzugt, dass das Rad 1 zu Beginn des Druckvorganges in horizontaler Position im Hinblick auf seine Hochachse (vertikal zur Rotationsachse R) wie in der Figur 3a gezeigt angeordnet ist. Die Figur 4a zeigt dies in vergrößerter Darstellung. Wie die Figuren 3a und 4a weiterhin zeigen, wird der Tampon 20 auf eine äußere Oberfläche des äußeren Hornabschnittes 2a herangefahren (hier in den Figuren wäre dies nach unten; bzw. in negativer Z-Richtung) bis der Tampon 20 mit einem vorbestimmten Druck auf die äußere Oberfläche 2a des Horns 2 drückt. Vorteilhaft braucht der Druck bei einer bekannten Maschinen- und Radgeometrie nicht gemessen werden, sondern kann vorteilhaft über den Verfahrweg des Tampons 20 eingestellt bzw. maschinell geregelt werden.

Der Tampon 20 (bzw. die Druckwalze) mit der nicht gezeigten Druckfarbe gibt diese nun an das äußere Horn 2 des Rades 1 ab, während das Rad 1 um seine Rotationsachse R (C-Achse, d.h. vertikale z-Achse in der Figur) gedreht wird. Der Tampon 20 steht mit einer nicht gezeigten Farbwanne in Verbindung und rotiert dann auf einer Oberfläche des äußeren Felgenhorns 2 des Rades 1. Der Tampon 20 wird dabei soweit mit der Vorderseite 10 des Rades 1 in Kontakt gebracht, wie der aufzudruckende Ring auf der Vorderseite 10 breit sein soll. Dies kann auch in mehreren Druckumläufen erfolgen. Wird eine so bezeichnete hochdeckende Druckfarbe verwendet, so kann es bereits ausreichen, dass jeder zu bedruckende Abschnitt des äußeren Horns 2 lediglich einmalig von dem Tampon 20 überstrichen wird, so dass der gesamte Druckvorgang sehr schnell erfolgen kann. Je nach gewünschter Deckkraft und Eigenschaften der Farbe kann die Anzahl der Drucklagen jedoch auch erhöht werden.

Die weiteren Figuren 3b bis 3d und 4b, 5a und 5b zeigen dann weitere Ausschnitte des Druckvorgangs, sozusagen als Stroboskopaufnahmen des kontinuierlichen Verschwenkvorganges, den das Rad 1 vollzieht. Das Verschwenken des Rades 1 (mittels des gebogenen Pfeils auch in der Figuren angezeigt) wird dabei bevorzugt von einem Drehtisch bzw. der Radaufnahmeeinrichtungen, auf dem das Rad 1 montiert ist, durchgeführt. Des besseren Verständnisses halber werden hier einzelne Zwischenpositionen des Rades 1 und relativ dazu des Tampons 20 während des Verschwenkvorganges sichtbar gemacht.

Die Figuren 3b und 4b zeigen eine Schwenkposition des Rades 1 nachdem der Druckvorgang angelaufen ist und bei ca. 20°-30° Verschwenkung zu der Horizontalen. Es wird deutlich, dass die Verschwenkung derart durchgeführt wird, dass der Tampon 20 positionsgetreu/an fester Position belassen werden kann. Der Tampon 20 kann folglich lediglich um eine eigene Rotationsachse r (s. Figur 4a) herum rotieren und dabei auf der Oberfläche des Rades 1 abrollen. Das äußere Horn 2 wird dabei, stets in Kontakt mit dem Tampon 20, unter dem Tampon 20 hinweg verschwenkt und gleichzeitig um die eigene Rotationsachse R rotiert. Die im Hinblick auf die Kontaktfläche bzw. -punkt zwischen äußerem Horn 2 und Tampon 20 positionsgetreue Verschwenkung erlaubt somit, dass Radrotationsumlauf für Radrotationsumlauf die Farbschicht 5 von der Position A bis zur Position E kontinuierlich in dessen Ausdehnung wächst; und zwar mit jeder weiteren, bevorzugt kontinuierlichen, Verschwenkung des Rades 1. Wie bereits erläutert, bleibt der Kontaktbereich zwischen Tampon 20 und Rad 1 hinsichtlich der räumlichen Orientierung gleich während der Teil der Oberfläche des Horns 2, der mit dem Tampon 20 in Kontakt steht, sich verändert.

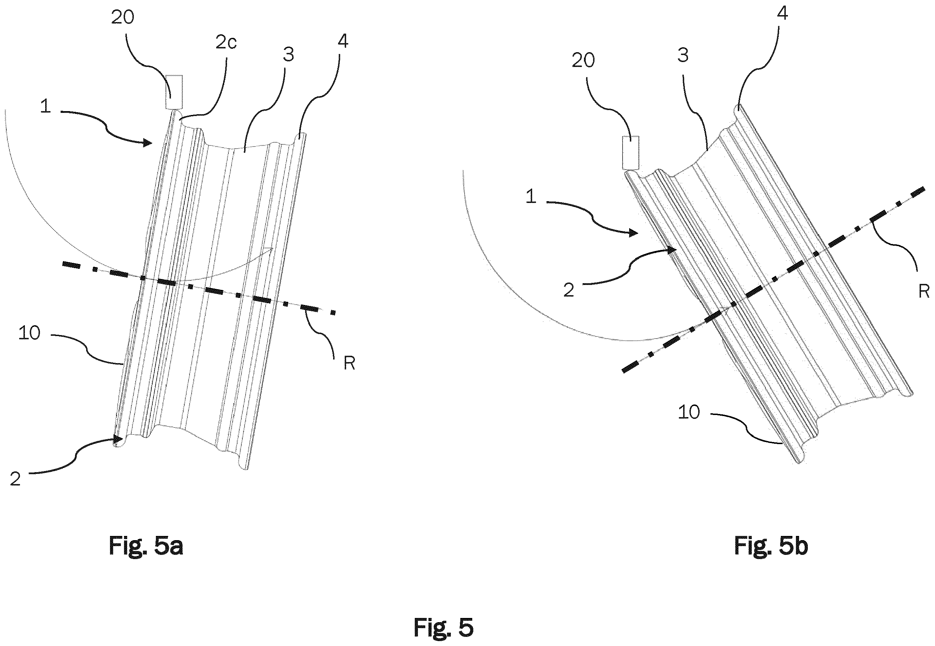

Die Figuren 3c und 5a zeigen dann weiterhin, genauso wie die Figuren 3d und 5b, eine noch weitere Verschwenkung des Rades 1. Der maximale Verschwenkungswinkel kann abhängig von der Form des äußeren Horns 2 bei ca. 120° bis 150° liegen. Figuren 3c und 5b zeigen eine bereits sehr weite Verschwenkung bei ca. 110° gegenüber der Startausrichtung gemäß Figur 3a bzw. 4a. Hierzeigt sich, dass der Tampon 20 bereits deutlich in den Bereich der inneren Oberfläche 2c des Horns 2 vorgedrungen ist und dort Farbe aufbringen kann. Je nach Hornformung kann die in der Figur 5b gezeigte Stellung auch bereits die Endposition darstellen.

Nachdem die Endstellung erreicht ist, wird die Farbzugabe über den Tampon 20 gestoppt und der Tampon 20 aus dem Kontakt mit dem Horn 2 bzw. dem Rad 1 herausbewegt und die Rotation des Rades 1 gestoppt. Dies wird bevorzugt genau so gesteuert und aufeinander abgestimmt, dass keine Farbnasen gebildet werden. Insbesondere ist hierfür ein rechtzeitiges Verfahren des Tampons 20 relevant, das bevorzugt gleich nach dem Stoppen der Farbzugabe und vor dem Stoppen der Radrotation durchgeführt wird.

Aus Fig. 5b ist ferner ersichtlich beachtlich, dass in der gezeigten Schwenkposition die Druckwalze bzw. der Tampon 20 stärker auf einem äußeren Randbereich der Tamponbreite aufliegt, der an eine "Außenseite" des Tampons 20 anschließt. Mit "Außenseite" des Tampons 20 soll eine dem Rad 1 abgewandte Stirnseite des Tampons 20 bezeichnet werden, wenn sich das Rad 1 in der horizontalen Ausgangsposition befindet. Anhand der vier gezeigten Schwenkpositionen während des hornumgreifenden Druckvorgangs wird deutlich, dass die Geometrie des Tampons 20 neben ihrer Härte und dem gewählten Anpressdruck auf das Felgenhorn 2, ein Parameter zur Realisierung eines gleichmäßigen Farbauftrags auf der Oberfläche des Felgenhorns 2 ist. Ferner werden während des Druckvorgangs die Rotationsgeschwindigkeiten des Tampons 20 und des Rades 1 aufeinander derart synchronisiert, dass diese im Bereich ihrer Kontaktfläche keine bzw. keine wesentliche Relativgeschwindigkeit zueinander aufweisen. Dies kann zu einem verbesserten Druckergebnis beitragen.

Während des Druckvorgangs wird zudem bevorzugt Industriedruckluft, die vorgefiltertwird, in den Bereich des Kontaktes zwischen Tampon 20 und Rad 1 geblasen, so dass dort der Verdünner der verwendeten Druckfarbe schnell verdunstet und somit das Druckbild noch weiter verbessert werden kann. Die gewählte Druckstufe ist dabei abhängig von dem Abstand des Düsenkopfes zu dem Rad 1, des Düsenkopfes selbst und kann bis zu 7 bar betragen.

Ferner kann die Verdünnermenge der Druckfarbe konstant über den Druckvorgang gehalten werden, um eine gleichbleibende Druckqualität zu erreichen. Bevorzugt enthält die Druckfarbe bis zu 50 Gewichts% Verdünner. Die Deckkraft der Druckfarbe ist weiterhin einer der Parameter, die für die Steuerung des Verfahrensablaufs relevant sind, u.a. im Hinblick auf die Bestimmung des optiomalen Wertes für die Verschwenk- und Rotationsgeschwindigkeiten während des Drucks. Ebenfalls ist hier auch die Viskosität relevant sowie die Härte des Tampons 20. Bevorzugte Wertebereiche für das hier vorgestellte Verfahren, die ein optimales Druckergebnis ermöglichen, wurden bereits beschrieben. Innerhalb der genannten Bereiche können besonders bevorzugte Werte für einen spezifischen Druckauftrag eingestellt bzw. angesteuert werden.

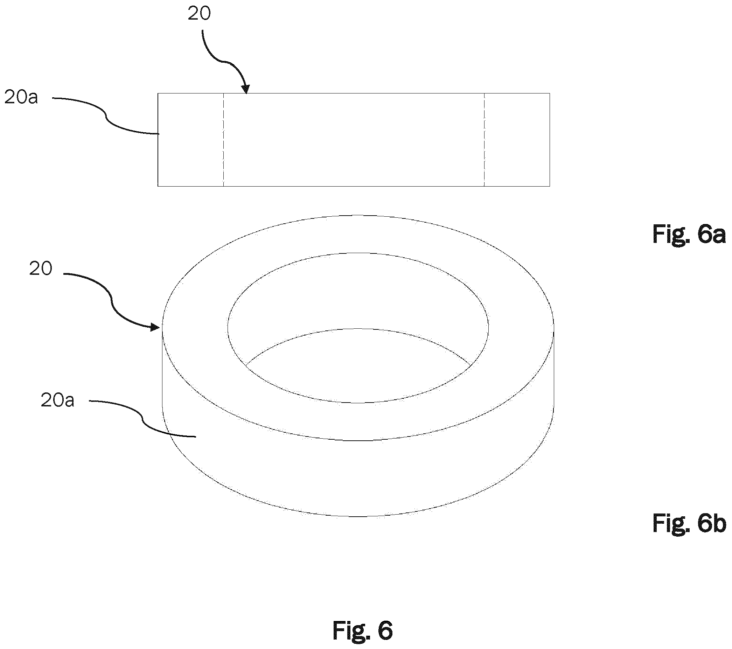

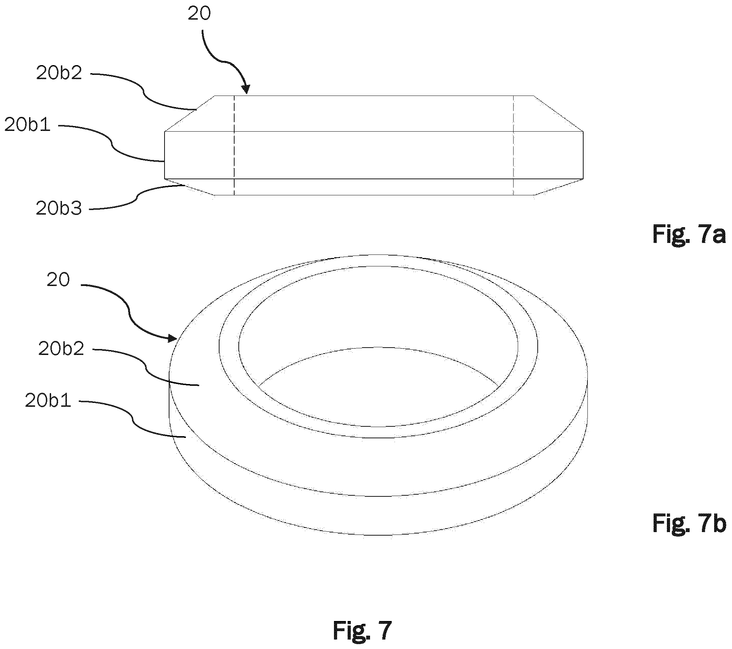

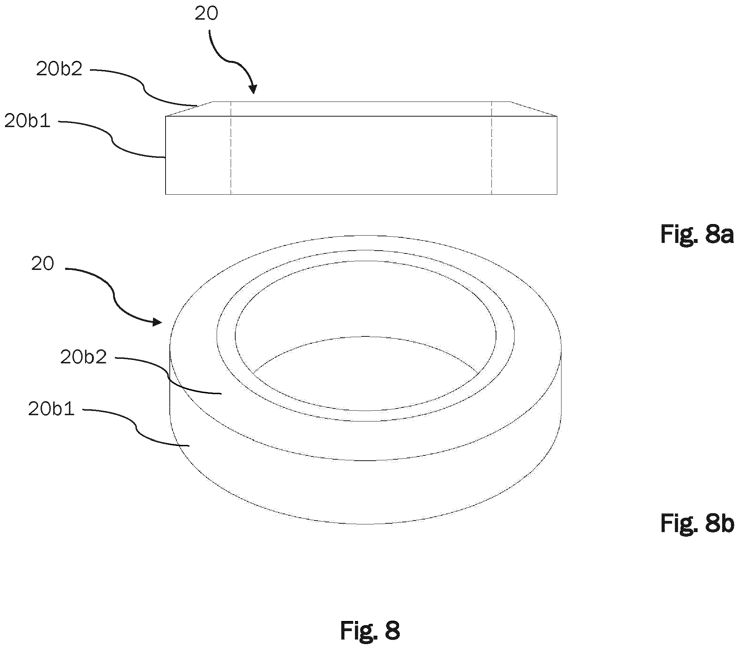

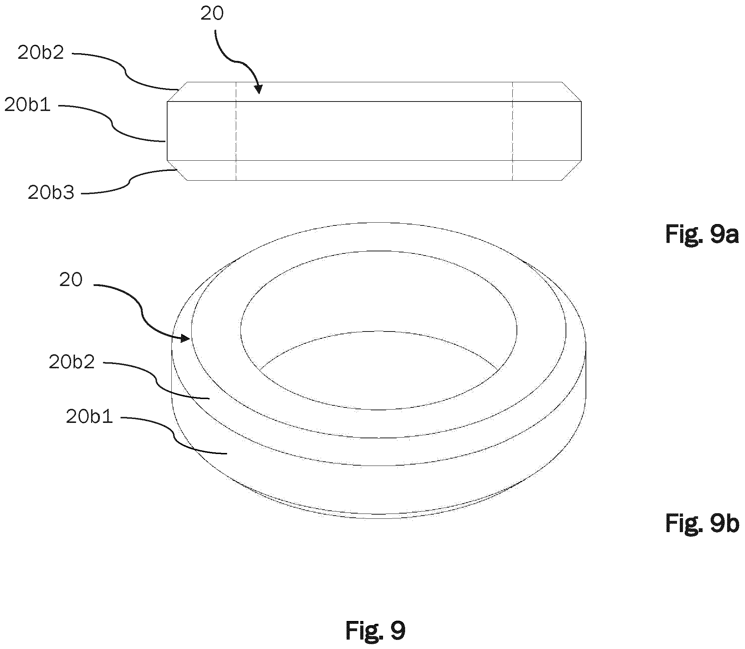

Die Figuren 6a-b, 7a-b und 8a-b zeigen ferner beispielhafte Geometrien in der Perspektive (jeweils die Figuren "b") und im Schnitt (jeweils die Figuren "a") des eingesetzten Tampons 20. So zeigt die Figur 6b, dass der Tampon 20 eine rechteckige äußere Mantelfläche 20a hat und der Schnitt in Figur 6a zeigt, dass diese Mantelfläche 20 durchgehend vertikal angeordnet ist. Im Vergleich dazu trifft dies nicht für die äußeren Mantelflächen 20a der Varianten der Figuren 7a, 8a und 9a zu, bei denen ein Teilabschnitt 20b1 der Mantelfläche 20a vertikal (bzw. parallel zur Rotationsachse des Tampons 20) angeordnet ist. Obere und ggf. untere Teilabschnitte 20b2, 20b3 sind hingegen angewinkelt angeordnet, so dass der Auflagebereich, der durch die Mantelfläche 20a gebildet wird und der Farbaufbringung vorrangig dient, verringert wird, d.h. schmäler. Dies kann vorteilhaft sein, wenn das zu bedruckende Horn 2 kleinere bzw. weniger zugängliche Formgebung oder Abmessungen aufweist. Ferner wird aus den Figuren 7b, 8b und 9b in Zusammenschau mit den jeweiligen Schnittdarstellungen deutlich, dass die Figuren 7 und 8 im Hinblick auf eine Horizontale bzw. eine senkrecht zur Rotationsachse angeordnete Mittelachse eine asymmetrische Form aufweisen, während die Figur 9 eine symmetrische Formgebung aufweist. Die verschiedenen Formen des Tampons 20 erlauben somit eine möglichst große Flexibilität bei der Bedruckung von unterschiedlich geformten äußeren Hörnern 2.

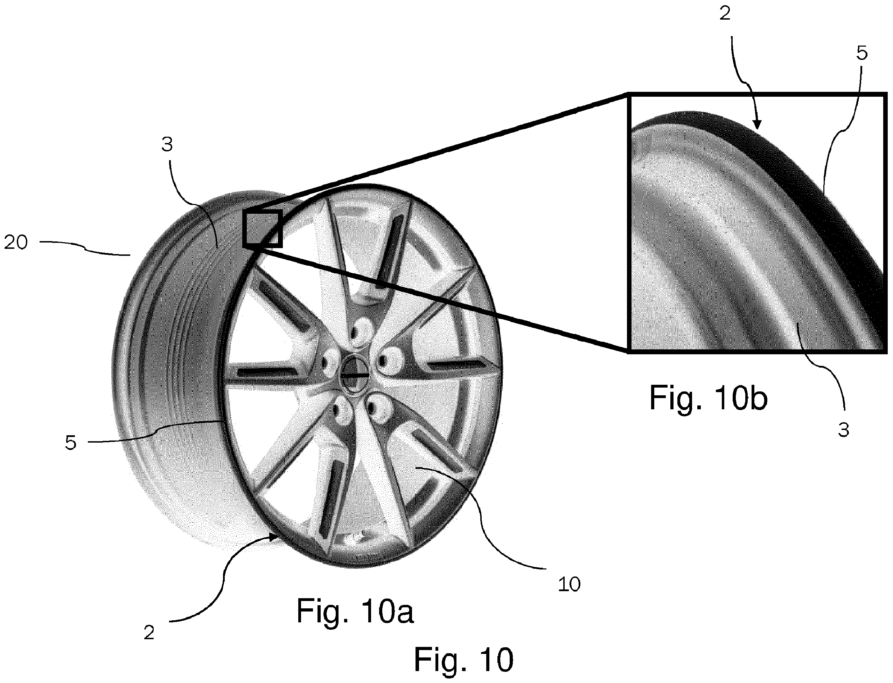

Figur 10 zeigt ein verfahrensgemäß bedrucktes Fahrzeugrad 1 mit der hornumgreifenden Farbschicht 5, die hier als schwarzfarbiger Ring im Bereich des Horns 2 sichtbar wird. Figur 10 zeigt den mit einem kleinen Rechteck markierten Ausschnitt des Fahrzeugrades 1 allerdings aus anderer Blickrichtung. Während die Blickrichtung schräg auf die Vorderseite 10 des Fahrzeugrades 1 gerichtet ist, ist die Blickrichtung auf den markierten Ausschnitt schräg von der Hinterseite 20 aus. Zudem ist der Ausschnitt vergrößert dargestellt und er zeigt einen Teil des äußeren Horns 2 von hinten und die Farbschicht 5, die hornumgreifend bis zu der Rückseite 2c des Horns 2 und in diese teilweise hineinlaufend, wie in Figur 10 ersichtlich, mit dem hier beschriebenen Verfahren hornumgreifend aufgedruckt wurde.

Insbesondere die hier beschrieben Verfahrensschritte des Rotierens des Rades 1 und des gleichzeitigen kontinuierlichen Verschwenkens des Rades 1, während der Tampon 20 auf der zu bedruckenden Oberfläche des äußeren Horns 2 aufliegt, ermöglichen in Kombination mit dem erweiterten Verschwenkwinkel über die 90° hinaus technisch vorteilhaft, dass das Rad 1 hornumgreifend bedruckt werden kann. Bevorzugt wird dabei, dass die Rotation vor dem Verschwenken gestartet wird, um zunächst eine erste vollständig 360° umlaufende erste Drucklage zu bilden und danach fortlaufend den Verschwenkwinkel zu verfahren, um die Breite des Drucks (Farbschicht 5) fortlaufend zu erweitern. Die Nutzung des bevorzugten Tampons 20 bzw. Tamponwalze als Druckwalze ist ebenfalls ein vorteilhafter Aspekt der vorliegenden Offenbarung, da u.a. die elastischen Eigenschaften des Tampons 20 (innerhalb des bevorzugten Härtebereiches) eine gegenüber anderen Drucktechniken überlegenes Druckbild im Zusammenhang mit der komplexen dreidimensionalen Geometrie des äußeren Horns 2 ermöglichen, wie die Erfinder des vorliegenden Verfahrens herausgefunden haben. So haben die Erfinder insbesondere festgestellt, dass bei einer Härte des Tampons 20 im Bereich von 18 Shore A bis 60 Shore A und einem Anpressdruck des Tampons 20 an das Rad 1 während des Druckes von 30 N bis 400 N zu den hier beschriebenen optimalen Druckergebnissen führt, die eine durchgehend einheitlich starke Farbschicht 5 von einer Felgenvorderseite 10 bis weit in den Bereich der Innenseite 2c des Horns 2 mit hoher Genauigkeit und Reproduzierbarkeit ermöglichen. Die Abnutzung des Tampons 20 ist zudem sehr gering und somit können auch die Wartungsintervalle bzw. Austauschintervalle kostengünstig verlängert werden.

Die horizontale Ausrichtung des Rades 1 zu Beginn des Druckvorgangs hat sich zudem insbesondere im Hinblick mit einem Druckstart an der äußeren Oberfläche 2a des äußeren Horns 2 als besonders bevorzugt gezeigt, da hier der Druckauftrag bei dem für die Druckqualität kritischen ersten Kontakt zwischen dem Rad 1 und dem Tampon 20 sehr genau gesteuert werden kann und die Tamponführung besonders wenig aufwendig und präzise entlang einer einzelnen Achse, der Z-Richtung, führbar ist. Dass der Tampon 20 bevorzugt nach dem Anlauf des Druckvogangs nicht weiter hinsichtlich seiner Position im Raum verändert wird, ist ein weiterer Vorteil des hier beschriebenen Verfahrens, da somit die Bewegungskoordination von verschiedenen Komponenten relativ zueinander entfällt und insbesondere lediglich die Position des Rades 1 zu steuern bleibt.

Die Druckqualität ist besonders günstig im Hinblick auf ein genaues und reproduzierbares Druckbild bzw. Farbauftrag, wenn die Rotationsgeschwindigkeiten des Rades 1 und des Tampons 20 derart zueinander gesteuert werden, dass möglichst keine oder eine geringe Relativgeschwindigkeit im Kontaktbereich vorliegt, wie die Erfinder ebenfalls festgestellt haben.

Zusammenfassend ist festzuhalten, dass das beanspruchte Verfahren eine hornumgreifende Bedruckung des äußeren Felgenhorns ermöglicht, mit dem auch die Oberflächen der Stirn- und Innenseite des Felgenhorns maschinell und effizient bedruckt werden können. Insbesondere kann mittels der hier beschriebenen Verfahrensschritte eine weitere Automatisierung der Radherstellung bereitgestellt werden.

## Patentansprüche

1. Verfahren zum hornumgreifenden Bedrucken eines Felgenhorns (2) eines Fahrzeugrades (1) mit einer Radscheibe und einer Felge umfassend die folgenden Schritte:
- Fixieren des Fahrzeugrades (1) an einer Radaufnahmeeinrichtung, so dass die Radscheibe des Fahrzeugrades (1) frei zugänglich angeordnet ist;
wobei das Verfahren durch folgende Schritte gekennzeichnet ist:
- Positionieren einer Druckwalze gegenüber einer vorbestimmten Oberfläche eines äußeren Felgenhorns (2) der Felge in einem vorbestimmten Abstand zu der Oberfläche des Felgenhorns (2);
- Starten einer Rotation des Fahrzeugrades (1) und/oder der Radaufnahmeeinrichtung;
- Positionieren der Druckwalze auf der vorbestimmten Oberfläche des äu-ßeren Felgenhorns (2) und Starten eines Druckvorgangs durch Zufuhr einer Druckfarbe und Starten einer Rotation der Druckwalze;
- kontinuierliches Verschwenken des Fahrzeugrades (1) und/oder der Radaufnahmeeinrichtung aus einer horizontalen Position bis zu einem vorbestimmten maximalen Schwenkwinkel, wobei der vorbestimmte maximale Schwenkwinkel größer als 90° ist;
- Abheben der Druckwalze von einer Oberfläche des äußeren Felgenhorns (2).

2. Verfahren nach Anspruch 1 umfassend die folgenden Schritte:
- Positionieren einer Druckwalze gegenüber einer äußeren oder inneren Oberfläche (2a, 2c) eines äußeren Felgenhorns (2) der Felge in einem vorbestimmten Abstand zur Oberfläche des Felgenhorns (2);
- Positionieren der Druckwalze auf der äußeren oder inneren Oberfläche (2c) des äußeren Felgenhorns (2) und Starten eines Druckvorgangs durch Zufuhr einer Druckfarbe und Starten einer Rotation der Druckwalze;
- kontinuierliches Verschwenken eines Drehtisches, auf dem das Fahrzeugrad (1) fixiert ist, um eine x-Achse einer Dreh- und Schwenkeinheit aus einer horizontalen Position bis zu einem vorbestimmten maximalen Schwenkwinkel, wobei der vorbestimmte maximale Schwenkwinkel größer als 90° ist;
- Beenden des Druckvorgangs durch Abheben der Druckwalze von der inneren Oberfläche (2c) des äußeren Felgenhorns (2), falls die Druckwalze zunächst auf der äußeren Oberfläche (2a) gestartet ist, oder von der äußeren Oberfläche (2a) des äußeren Felgenhorns (2), falls die Druckwalze zunächst auf der inneren Oberfläche gestartet ist;
- Stoppen der Rotation des Drehtisches und Verfahren der Druckwalze vertikal nach oben in eine vordefinierte Position;
- Rückschwenken des Drehtisches in die horizontale Position.

3. Verfahren nach Patentanspruch 1 und/oder 2, **gekennzeichnet dadurch, dass** das Positionieren der Druckwalze gegenüber der vorbestimmten Oberfläche des äu-ßeren Felgenhorns (2) der Felge in dem vorbestimmten Abstand zu der Oberfläche des Felgenhorns (2) ein Verfahren der Druckwalze vertikal nach unten in eine vordefinierte Position umfasst.

4. Verfahren nach zumindest einem der voranstehenden Patentansprüche, **gekennzeichnet dadurch, dass** eine Breite eines Druckstreifens auf der Druckwalze größer als eine Auflagefläche der Druckwalze auf dem Felgenhorn ist.

5. Verfahren nach zumindest einem der voranstehenden Patentansprüche, **gekennzeichnet dadurch, dass** die Druckwalze eine Tampondruckwalze (20) ist und Silikon enthält, wobei die Tampondruckwalze (20) eine Härte im Bereich von 18 Shore A bis 60 Shore A aufweist.

6. Verfahren nach zumindest einem der voranstehenden Patentansprüche, **gekennzeichnet dadurch, dass** die Druckwalze mit einer vorbestimmten Druckkraft im Bereich von 30 N bis 400 N auf die Oberfläche des Felgenhorns (2) gedrückt wird.

7. Verfahren nach zumindest einem der voranstehenden Patentansprüche, **gekennzeichnet dadurch, dass** das kontinuierliche Verschwenken des Drehtisches nach einer vorbestimmten Zeit startet, wobei der Wert der vorbestimmten Zeit abhängig von dem Deckungsvermögen und der Viskosität der Druckfarbe ist.

8. Verfahren nach zumindest einem der voranstehenden Patentansprüche, **gekennzeichnet dadurch, dass** das Fahrzeugrad (1) und/oder die Radaufnahmeeinrichtung mit einer vorbestimmten Drehzahl rotiert, wobei der Wert der vorbestimmten Drehzahl abhängig vom Farbsystem und der zu bedruckenden Oberflächengeometrie ist.

9. Verfahren nach zumindest einem der voranstehenden Patentansprüche, **gekennzeichnet dadurch, dass** das Fahrzeugrad (1) und/oder die Radaufnahmeeinrichtung mit einer vorbestimmten Drehzahl rotiert und die Druckwalze mit einer vorbestimmten Drehzahl rotiert, wobei die Drehzahlen des Fahrzeugrades (1) und der Druckwalze derart gesteuert werden, dass die Relativgeschwindigkeit in einem Kontaktbereich zwischen Druckwalze und Fahrzeugrad (1) minimiert ist.

10. Verfahren nach zumindest einem der voranstehenden Patentansprüche, **gekennzeichnet dadurch, dass** das Verschwenken mit einer vorbestimmten Schwenkgeschwindigkeit erfolgt, wobei der Wert der vorbestimmten Schwenkgeschwindigkeit abhängig von dem Deckungsvermögen der Druckfarbe ist.

11. Verfahren nach zumindest einem der voranstehenden Patentansprüche, **gekennzeichnet dadurch, dass**, nach Erreichen des vorbestimmten maximalen Schwenkwinkels, die Druckwalze nach einer vorbestimmten Zeit von der inneren Felgenhornoberfläche (2c) abgehoben wird, wobei der Wert der vorbestimmte Zeit abhängig von dem Deckungsvermögen der Druckfarbe ist.

12. Verfahren nach zumindest einem der voranstehenden Patentansprüche, **gekennzeichnet dadurch, dass** die Druckfarbe eine Ein- oder Zweikomponentenfarbe und das Druckgemisch einen Verdünner und die Druckfarbe aufweist, wobei ein Verhältnis von Verdünner zu Druckfarbe in dem Druckgemisch während des Druckvorgangs nahezu konstant gehalten wird.

13. Verfahren nach zumindest einem der voranstehenden Patentansprüche, **gekennzeichnet dadurch, dass** während des Druckvorgangs Verdünner dem Druckgemisch zugefügt wird, so dass das Verhältnis von Verdünner zu Druckfarbe nahezu konstant bleibt.

14. Fahrzeugrad (1) mit einer Radscheibe und einer Felge (3), die zumindest ein äußeres Felgenhorn (2) mit einer äußeren Oberfläche (2a), einer Scheitelfläche (2b) und einer inneren Oberfläche (2c) aufweist, **gekennzeichnet dadurch, dass** das äu-βere Felgenhorn (2) im Bereich der äußeren Oberfläche (2a), der Scheitelfläche (2b) und der inneren Oberfläche (2c) mittels des Verfahrens gemäß zumindest einem der voranstehenden Patentansprüche zumindest teilweise bedruckt ist.

## Claims

1. Method for printing a rim flange (2) of a vehicle wheel (1) with a wheel disc and a rim around the flange, comprising the following steps:
- fixing the vehicle wheel (1) to a wheel receiving device, so that the wheel disc of the vehicle wheel (1) is arranged in a freely accessible manner;
wherein the method is **characterised by** the following steps:
- positioning a printing roller opposite a predetermined surface of an outer rim flange (2) of the rim at a predetermined distance from the surface of the rim flange (2);
- starting a rotation of the vehicle wheel (1) and/or of the wheel receiving device;
- positioning the printing roller on the predetermined surface of the outer rim flange (2) and starting a printing process by supplying a printing ink and starting a rotation of the printing roller;
- continuously pivoting the vehicle wheel (1) and/or the wheel receiving device from a horizontal position up to a predetermined maximum pivot angle, wherein the predetermined maximum pivot angle is greater than 90°;
- lifting the printing roller from a surface of the outer rim flange (2).

2. Method according to claim 1, comprising the following steps:
- positioning a printing roller opposite an outer or inner surface (2a, 2c) of an outer rim flange (2) of the rim at a predetermined distance from the surface of the rim flange (2);
- positioning the printing roller on the outer or inner surface (2c) of the outer rim flange (2) and starting a printing process by supplying a printing ink and starting a rotation of the printing roller;
- continuously pivoting a rotary table, on which the vehicle wheel (1) is fixed, about an x-axis of a rotating and pivoting unit from a horizontal position up to a predetermined maximum pivot angle, wherein the predetermined maximum pivot angle is greater than 90°;
- ending the printing process by lifting the printing roller from the inner surface (2c) of the outer rim flange (2) if the printing roller is initially started on the outer surface (2a) or from the outer surface (2a) of the outer rim flange (2) if the printing roller is initially started on the inner surface;
- stopping the rotation of the rotary table and moving the printing roller vertically upwards into a predefined position;
- pivoting the rotary table back into the horizontal position.

3. Method according to claim 1 and/or 2, **characterised in that** the positioning of the printing roller opposite the predetermined surface of the outer rim flange (2) of the rim at the predetermined distance from the surface of the rim flange (2) comprises moving the printing roller vertically downwards into a predefined position.

4. Method according to at least one of the preceding claims, **characterised in that** a width of a printing strip on the printing roller is greater than a support surface of the printing roller on the rim flange.

5. Method according to at least one of the preceding claims, **characterised in that** the printing roller is a pad printing roller (20) and contains silicone, wherein the pad printing roller (20) has a hardness in the range of 18 Shore A to 60 Shore A.

6. Method according to at least one of the preceding claims, **characterised in that** the printing roller is pressed onto the surface of the rim flange (2) with a predetermined printing force in the range of 30 N to 400 N.

7. Method according to at least one of the preceding claims, **characterised in that** the continuous pivoting of the rotary table starts after a predetermined time, wherein the value of the predetermined time is dependent on the covering capacity and the viscosity of the printing ink.

8. Method according to at least one of the preceding claims, **characterised in that** the vehicle wheel (1) and/or the wheel receiving device rotates at a predetermined rotational speed, wherein the value of the predetermined rotational speed is dependent on the ink system and the surface geometry to be printed.

9. Method according to at least one of the preceding claims, **characterised in that** the vehicle wheel (1) and/or the wheel receiving device rotates at a predetermined rotational speed and the printing roller rotates at a predetermined rotational speed, wherein the rotational speeds of the vehicle wheel (1) and of the printing roller are controlled in such a way that the relative speed in a contact region between printing roller and vehicle wheel (1) is minimised.

10. Method according to at least one of the preceding claims, **characterised in that** the pivoting takes place at a predetermined pivoting speed, wherein the value of the predetermined pivoting speed is dependent on the covering capacity of the printing ink.

11. Method according to at least one of the preceding claims, **characterised in that**, after reaching the predetermined maximum pivot angle, the printing roller is lifted off the inner rim flange surface (2c) after a predetermined time, wherein the value of the predetermined time is dependent on the covering capacity of the printing ink.

12. Method according to at least one of the preceding claims, **characterised in that** the printing ink has a one- or two-component ink and the printing mixture has a thinner and the printing ink, wherein a ratio of thinner to printing ink in the printing mixture is kept almost constant during the printing process.

13. Method according to at least one of the preceding claims, **characterised in that** thinner is added to the printing mixture during the printing process, so that the ratio of thinner to printing ink remains almost constant.

14. Vehicle wheel (1) with a wheel disc and a rim (3), which has at least one outer rim flange (2) with an outer surface (2a), a crown surface (2b) and an inner surface (2c), **characterised in that** the outer rim flange (2) is at least partially printed in the region of the outer surface (2a), the crown surface (2b) and the inner surface (2c) by means of the method according to at least one of the preceding claims.

## Revendications

1. Procédé d'impression d'une corne de jante (2) d'une roue de véhicule (1) avec un disque de roue et une jante, comprenant les étapes suivantes :
- fixation de la roue de véhicule (1) sur un dispositif de réception de roue, de sorte que le disque de roue de la roue de véhicule (1) est disposé de manière librement accessible ;
le procédé étant **caractérisé par** les étapes suivantes :
- positionnement d'un rouleau d'impression par rapport à une surface prédéterminée d'une corne de jante extérieure (2) de la jante à une distance prédéterminée de la surface de la corne de jante (2) ;
- démarrage d'une rotation de la roue de véhicule (1) et/ou du dispositif de réception de roue ;
- positionnement du rouleau d'impression sur la surface prédéterminée de la corne de jante extérieure (2) et démarrage d'un processus d'impression par alimentation d'une encre d'impression et démarrage d'une rotation du rouleau d'impression ;
- pivotement continu de la roue de véhicule (1) et/ou du dispositif de réception de roue depuis une position horizontale jusqu'à un angle de pivotement maximal prédéterminé, l'angle de pivotement maximal prédéterminé étant supérieur à 90° ;
- soulèvement du rouleau d'impression d'une surface de la corne de jante extérieure (2).

2. Procédé selon la revendication 1, comprenant les étapes suivantes :
- positionnement d'un rouleau d'impression par rapport à une surface extérieure ou intérieure (2a, 2c) d'une corne de jante extérieure (2) de la jante à une distance prédéterminée de la surface de la corne de jante (2) ;
- positionnement du rouleau d'impression sur la surface extérieure ou intérieure (2c) de la corne de jante extérieure (2) et démarrage d'un processus d'impression par alimentation d'une encre d'impression et démarrage d'une rotation du rouleau d'impression ;
- pivotement continu d'une table tournante, sur laquelle la roue de véhicule (1) est fixée, autour d'un axe x d'une unité de rotation et de pivotement depuis une position horizontale jusqu'à un angle de pivotement maximal prédéterminé, l'angle de pivotement maximal prédéterminé étant supérieur à 90° ;
- fin du processus d'impression par soulèvement du rouleau d'impression de la surface intérieure (2c) de la corne de jante extérieure (2) si le rouleau d'impression est initialement démarré sur la surface extérieure (2a) ou de la surface extérieure (2a) de la corne de jante extérieure (2) si le rouleau d'impression est initialement démarré sur la surface intérieure ;
- arrêt de la rotation de la table tournante et déplacement du rouleau d'impression verticalement vers le haut dans une position prédéfinie ;
- pivotement en arrière de la table tournante dans la position horizontale.

3. Procédé selon la revendication 1 et/ou 2, **caractérisé en ce que** le positionnement du rouleau d'impression par rapport à la surface prédéterminée de la corne de jante extérieure (2) de la jante à la distance prédéterminée de la surface de la corne de jante (2) comprend un déplacement du rouleau d'impression verticalement vers le bas dans une position prédéfinie.

4. Procédé selon au moins l'une des revendications précédentes, **caractérisé en ce qu'**une largeur d'une bande d'impression sur le rouleau d'impression est supérieure à une surface d'appui du rouleau d'impression sur la corne de jante.

5. Procédé selon au moins l'une des revendications précédentes, **caractérisé en ce que** le rouleau d'impression est un rouleau d'impression tampon (20) et contient du silicone, le rouleau d'impression tampon (20) présentant une dureté dans la plage de 18 Shore A à 60 Shore A.

6. Procédé selon au moins l'une des revendications précédentes, **caractérisé en ce que** le rouleau d'impression est pressé avec une force d'impression prédéterminée dans la plage de 30 N à 400 N sur la surface de la corne de jante (2).

7. Procédé selon au moins l'une des revendications précédentes, **caractérisé en ce que** le pivotement continu de la table tournante démarre après un temps prédéterminé, la valeur du temps prédéterminé dépendant de la capacité de recouvrement et de la viscosité de l'encre d'impression.

8. Procédé selon au moins l'une des revendications précédentes, **caractérisé en ce que** la roue de véhicule (1) et/ou le dispositif de réception de roue tournent à une vitesse de rotation prédéterminée, la valeur de la vitesse de rotation prédéterminée dépendant du système d'encre et de la géométrie de surface à imprimer.

9. Procédé selon au moins l'une des revendications précédentes, **caractérisé en ce que** la roue de véhicule (1) et/ou le dispositif de réception de roue tournent à une vitesse de rotation prédéterminée et le rouleau d'impression tourne à une vitesse de rotation prédéterminée, les vitesses de rotation de la roue de véhicule (1) et du rouleau d'impression étant commandées de telle sorte que la vitesse relative dans une zone de contact entre le rouleau d'impression et la roue de véhicule (1) est minimisée.

10. Procédé selon au moins l'une des revendications précédentes, **caractérisé en ce que** le pivotement s'effectue à une vitesse de pivotement prédéterminée, la valeur de la vitesse de pivotement prédéterminée dépendant de la capacité de recouvrement de l'encre d'impression.

11. Procédé selon au moins l'une des revendications précédentes, **caractérisé en ce que**, après avoir atteint l'angle de pivotement maximal prédéterminé, le rouleau d'impression est soulevé de la surface de corne de jante intérieure (2c) après un temps prédéterminé, la valeur du temps prédéterminé dépendant de la capacité de recouvrement de l'encre d'impression.

12. Procédé selon au moins l'une des revendications précédentes, **caractérisé en ce que** l'encre d'impression présente une encre à un ou deux composants et le mélange d'impression présente un diluant et l'encre d'impression, un rapport du diluant à l'encre d'impression dans le mélange d'impression étant maintenu presque constant pendant le processus d'impression.

13. Procédé selon au moins l'une des revendications précédentes, **caractérisé en ce que**, pendant le processus d'impression, du diluant est ajouté au mélange d'impression de sorte que le rapport du diluant à l'encre d'impression reste presque constant.

14. Roue de véhicule (1) avec un disque de roue et une jante (3), qui présente au moins une corne de jante extérieure (2) avec une surface extérieure (2a), une surface de sommet (2b) et une surface intérieure (2c), **caractérisée en ce que** la corne de jante extérieure (2) est au moins partiellement imprimée dans la zone de la surface extérieure (2a), de la surface de sommet (2b) et de la surface intérieure (2c) au moyen du procédé selon au moins l'une des revendications précédentes.
